(19) **Europäisches Patentamt / European Patent Office / Office européen des brevets**

(11) **EP 2 180 036 A1**

(12) **EUROPEAN PATENT APPLICATION**
published in accordance with Art. 153(4) EPC

(43) Date of publication:
**28.04.2010 Bulletin 2010/17**

(21) Application number: **08791815.7**

(22) Date of filing: **29.07.2008**

(51) Int Cl.:
*C12G 3/04* (2006.01)    *A23L 1/222* (2006.01)

(86) International application number:
**PCT/JP2008/063580**

(87) International publication number:
**WO 2009/017116 (05.02.2009 Gazette 2009/06)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **30.07.2007  JP 2007196969**
**19.02.2008  JP 2008037937**

(71) Applicant: **Suntory Holdings Limited**
**Kita-ku, Osaka-shi,**
**Osaka 530-8203 (JP)**

(72) Inventors:
• **MIZUTA, Mami**
  **Kanagawa 2110067 (JP)**
• **MATSUBAYASHI, Hideki**
  **Kanagawa 2110067 (JP)**

(74) Representative: **Vossius & Partner**
**Siebertstraße 4**
**81675 München (DE)**

(54) **FRUIT-JUICE-CONTAINING ALCOHOLIC BEVERAGE BASE, AND BEVERAGE PRODUCED BY DILUTING THE BASE**

(57)    A fruit juice-containing alcoholic beverage base obtained by mixing a high concentration of fruit juice and a high concentration of alcohol or its dilution-type alcoholic beverage is provided. The fruit juice is contained at a specific ratio to the alcohol so that the irritation distinctive of alcohol is reduced or eliminated and the base has a flavor of mature fruit. In particular, a fruit juice-containing alcoholic beverage base containing at least 9 v/v% of an alcohol and a fruit juice wherein the fruit juice is contained in an amount that is at least 11.5 times the amount of the alcohol, based on the percentage of fruit juice, or an alcoholic beverage prepared by dilution of the base is provided.

**Description**

TECHNICAL FIELD

The present invention relates to a fruit juice-containing alcoholic beverage base containing an alcohol and a fruit juice at high concentrations. In particular, the present invention relates to a fruit juice-containing alcoholic beverage that is obtained by mixing at least 9 v/v% of alcohol with a high concentration of fruit juice at a specific ratio and which can improve the taste of a dilution-type alcoholic beverage obtained by dilution of the fruit juice-containing alcoholic beverage base. The present invention further relates to a dilution-type alcoholic beverage to be consumed, which is prepared by dilution of the alcoholic beverage base containing an alcohol and a fruit juice at high concentrations.

BACKGROUND ART

Alcoholic beverages are widely consumed as a beverage for pleasure or a beverage for medical use. Since alcohol has disinfection and antibacterial effects, it may be added to improve the shelf life of a beverage and food. However, many alcoholic beverages or alcohol-containing beverages (hereinafter, they are referred to as "alcoholic beverage") have a strong irritation that is a distinctive feature of alcohol (the irritation is sometimes referred to as "alcoholic irritation" in this specification), and are disagreeable to some people because of such an irritation.

Various attempts have been made to reduce or eliminate such an alcohol irritation. For example, it is known that whiskey becomes mellow and drinkable after a long period of maturation of about 10-100 years. On the basis of such a finding obtained by maturation of whiskey, it is proposed to add a polyphenol, especially lyoniresinol, sinapaldehyde, and coniferyl aldehyde, which are solvent extraction products of barrels used in maturation, to an alcoholic beverage so that a peroxide such as hydrogen peroxide that is excessively produced in the mouth by consumption of an alcohol beverage is eliminated to reduce an irritation originating from alcohol (Patent Document 1).

The following methods are also proposed to reduce the irritation that is distinctive of alcohol: a method in which sucralose is added to an alcoholic beverage to reduce bitterness and burning sensation originating from alcohol in the alcoholic beverage (Patent Document 2); a method in which glucan comprising a moiety with an inner branched cyclic structure and a moiety with an outer branched cyclic structure and having a degree of polymerization of at least 50 is added to an alcohol-containing food or beverage so that a smell and an irritation of alcohol are moderated to make the food and beverage mild (Patent Document 3); a method in which betaine, which is an amino acid, is added to reduce an irritant smell of an alcohol-containing food or beverage (Patent Document 4); and a method in which paradicsom paprika fruit is added to eliminate an unpleasant smell of an alcoholic beverage so that an aftertaste and a taste are improved (Patent Document 5).

Further, it is reported that an irritant sensation of alcohol in a fruit juice-containing alcoholic beverage with a percentage of fructose in a total sugar in the alcoholic beverage of at least 65 w/w%, preferably at least 75 w/w%, is masked to provide a smooth and mild taste (Patent Document 6).

Further, a distilled alcoholic beverage for use in the production of fruit wine has a disadvantage in that a fruit flavor is spoiled by an irritant smell of alcohol. To solve this problem, a wine for use in the production of fruit wine that has an alcohol concentration of at least 20% and is obtained by addition of alcohol to wine and then mixing it is proposed (Patent Document 7).

Patent Document 1: JP 2006-271273 A
Patent Document 2: JP H08-224075 A
Patent Document 3: JP 2003-289824 A
Patent Document 4: JP 2003-204779 A
Patent Document 5: JP H10-313849 A
Patent Document 6: JP2005-192473 A
Patent Document 7: JP2003-210154 A

DISCLOSURE OF THE INVENTION

PROBLEMS TO BE SOLVED BY THE INVENTION

The present invention provides a fruit juice-containing alcoholic beverage base that contains alcohol and is to be diluted to prepare a fruit juice-containing alcoholic beverage, in which a fruit flavor is maintained or improved and an alcohol irritation is reduced or eliminated. The present invention also provides a fruit juice-containing alcoholic beverage prepared by dilution of the base (the alcoholic beverage is sometimes referred to as "dilution-type beverage" or "dilution-type alcoholic beverage" in this specification).

MEANS FOR SOLVING THE PROBLEMS

The present inventors extensively and intensively studied the above problems with a view of solving them. Consequently, they found that the alcohol irritation, which is a disadvantage of alcoholic beverages, can be reduced or eliminated by addition of a high-concentration fruit juice to a percentage of fruit juice of at least 80%. They also found that this action is increased by mixing a high concentration of alcohol and a high concentration of fruit juice and storing the mixture for at least a certain period of time.

The present inventors carried out further studies to find out that the alcohol irritation of an alcoholic beverage base or an alcoholic beverage containing alcohol at a high concentration of 9 v/v% can be eliminated almost completely by addition of fruit juice at a specific ratio to the alcohol. The present inventors found that especially addition of at least 300% of fruit juice, based on the percentage of fruit juice, at a specific ratio to the alcohol made the tastes of a fruit juice-containing alcoholic beverage base and its dilution-type alcoholic beverage mellow, deeper, and more pleasant. By the foregoing findings, the present invention was completed.

Specifically, the present invention is as follows:

1. A fruit juice-containing alcoholic beverage base comprising at least 9 v/v% of an alcohol and a fruit juice, wherein the fruit juice is contained in an amount that is at least 11.5 times an amount of the alcohol, based on a percentage of fruit juice;

2. The fruit juice-containing alcoholic beverage base of 1, wherein the fruit juice is contained in an amount that is at least 300%, based on a percentage of fruit juice, and is at least 19.0 times the amount of the alcohol;

3. The fruit juice-containing alcoholic beverage base of 1 or 2, wherein the fruit juice is a thermally concentrated fruit juice;

4. The fruit juice-containing alcoholic beverage base of any one of 1-3, wherein at least a part of the fruit juice has been subjected to clarification treatment;

5. The fruit juice-containing alcoholic beverage base of any one of 1-4, wherein the alcohol is a distilled alcohol;

6. The fruit juice-containing alcoholic beverage base of any one of 1-5 produced by a method comprising: the step 1 of mixing an alcohol with a fruit juice to obtain a mixed solution; and the step 2 of storing the mixed solution for at least 1 day;

7. The fruit juice-containing alcoholic beverage base of 6, wherein the method further comprises between the steps 1 and 2 the step 3 of packing the mixed solution into a container;

8. A dilution-type alcoholic beverage produced by mixing a fruit juice-containing alcoholic beverage base of any one of 1-7 with a diluting solution

9. The dilution-type alcoholic beverage of 8 having a percentage of fruit juice of 80% or higher; and

10. The dilution-type alcoholic beverage wherein the diluting solution is water or carbonated water.

ADVANTAGES OF THE INVENTION

The present invention can provide a fruit juice-containing alcoholic beverage having no irritant sensation distinctive of alcohol even when the alcoholic beverage contains a high concentration of alcohol. The present invention also provides an alcoholic beverage having a flavor of mature fruit that was not available in the past.

In an alcoholic beverage base of the present invention obtained by mixing an alcohol with a fruit juice and then storing the mixture for at least a certain period, the alcohol and the fruit juice are well blended during the storage step to make the taste of the combination of the flavor distinctive of the fruit and the alcohol more appropriate. Thus, a dilution-type alcoholic beverage that is palatable and which contains fruit juice and alcohol harmonizing with each other can be prepared with the alcoholic beverage base. Further, since the alcohol content is high, heat sterilization at the time of packing into a container is not required in a case in which the product is to be stored in the container in this method of production. Thus, the essential juiciness of fruit would not be lost.

The flavor of fruit in a dilution-type alcoholic beverage obtained by dilution of an alcoholic beverage base of the present invention containing alcohol and fruit juice at high concentrations would not be lost due to the irritant sensation distinctive of alcohol, making the beverage drinkable to a person who does not like alcohol, especially a person who does not like the irritant sensation distinctive of alcohol.

BEST MODE FOR CARRYING OUT THE INVENTION

The present invention is based on the finding that the alcohol irritation (sometimes referred to as "tingling sensation" in this specification) that gives a tingling sensation in the mouth when the alcohol is consumed (specifically, when the alcohol is taken into the mouth or after the alcohol is swallowed) can be reduced or eliminated by addition of a high concentration of fruit juice to a high-concentration alcoholic beverage at a specific ratio to the alcohol. The present invention provides a fruit juice-containing alcoholic beverage base containing such a high concentration of alcohol and a high concentration of fruit juice at a specific ratio (the fruit juice-containing alcoholic beverage base is sometimes referred to as "alcoholic beverage base" or "beverage base" in this specification) and a dilution-type alcoholic beverage obtained by mixing the alcoholic beverage base with a diluting solution (the alcoholic beverage is sometimes referred to as "dilution-type beverage" or "dilution-type alcoholic beverage" in this specification).

Production of alcoholic beverage base

(Alcohol component)

An alcoholic beverage of the present invention contains a high concentration of alcohol and a high concentration of fruit juice. The term "high concentration of alcohol" as used herein refers to an alcohol contained at a concentration that an alcohol irritation is strongly sensed; specifically an alcohol of 9 v/v% or higher, especially 12 v/v% or higher, further 16 v/v% or higher. An alcoholic beverage base of the present invention reduces the irritation distinctive of a high-concentration alcohol. When the concentration of alcohol is 30 v/v% or higher, there may be a case in which the effects are not produced. Thus, an upper limit of alcohol to be contained is lower than 30 v/v% or lower, preferably 24 v/v% or lower.

Since an alcoholic beverage base of the present invention contains a high concentration of alcohol, heat sterilization is not required; thus, deterioration in quality such as a savor change resulting from heating can be inhibited so that consumers can enjoy a fruit's essential flavor. This is a second feature of the present invention described later, and is significantly advantageous as an alcoholic beverage base having a flavor of mature fruit and its dilution-type alcoholic beverage.

Alcohols that can be used in the present invention are not particularly limited, and may be any alcohol that is drinkable. Examples include brewed alcohols, spirits (e.g., spirits such as gin, vodka, rum, tequila, and new spirits (a categoriy of spirit under the applicable Japanese law), and alcohols for use as an ingredient), liquors, whiskeys (e.g., whiskey, brandy), shochu (*Korui* and *Otsurui* (categories of shochu under the applicable law)), and brews such as refined sake, wine, and beer. Use of a distilled alcohol, i.e., whiskeys (e.g., whiskey, brandy), spirits (e.g., spirits such as gin, vodka, rum, and tequila, and alcohols for use as an ingredient), and shochu (*Korui* and *Otsurui*), is especially preferred in view of compatibility with fruit juice; that is to say, the flavor of fruit can be maintained.

The foregoing alcohols can be used singly or in combination in an alcoholic beverage base of the present invention. Preferably, an alcohol that complements the aroma and the taste of fruit is selected according to a fruit juice that is to be mixed; for example, spirits or brandy for grapefruit or grape juice, and spirits or rum for apple juice.

(Juice component)

The term "high concentration of fruit juice" as used herein refers to a fruit juice that is contained in a fruit juice alcoholic beverage base at a percentage of 80% or higher, preferably 100% or higher, more preferably 200% or higher, based on a "percentage of fruit juice." A straight fruit juice obtained by squeezing fruit may be used directly as the fruit juice to be used in the present invention, or a concentrated fruit juice may be used in the present invention. As necessary, the sugar level of a concentrated fruit juice may be adjusted with sugars, honey, or the like, or the acidity of the juice may be adjusted. Whole fruit juice obtained by grinding whole fruit including skins of the fruit and eliminating only solid matters that are especially hard such as seeds, fruit puree obtained by pureeing fruit, or fruit juice obtained by grinding or extracting pulp of dried fruit can also be used.

The type of fruit juice is not particularly limited. Examples include citrus fruit juices (e.g., orange juice, mandarin juice, grapefruit juice, lemon juice, lime juice), apple juice, grape juice, peach juice, tropical fruit juices (e.g., pineapple, guava, banana, mango, acerola, papaya, passion fruit), other fruit juices (e.g., Japanese plum juice, pear juice, apricot juice, plum juice, berry juice, kiwifruit juice), tomato juice, carrot juice, strawberry juice, and melon juice. Citrus fruit juice, apple juice, peach juice, grape juice, blueberry juice, Japanese plum juice, blackcurrant juice, and the like are preferred. Citrus fruit juice, apple juice, peach juice, and grape juice are more preferred. In the present invention, these fruit juices are used singly or in combination.

In general, the term "percentage of fruit juice" refers to a relative concentration based on a straight fruit juice obtained by squeezing fruit as 100%, and can be converted in accordance with a reference level of sugar refractometer index (˚Bx) (Table 1 below) or a reference level of acidity (%) (Table 2 below) for each fruit specified in the JAS standard (Japanese Agricultural Standard for fruit beverages). For example, the reference Bx for apple is 10˚ according to the JAS; thus, for example an apple juice of Bx 70˚ is of a seven-fold concentration. The amount of fruit juice is normally expressed in % by weight (i.e., an amount of fruit juice (g) (w/w) per 100 g of the beverage) in many cases. However, in cases of an alcoholic beverage as in the present invention, a specific gravity (g/ml) of the beverage varies according to a concentration of alcohol. Thus, even when amounts of fruit juices that are used as the same, levels of a fruit juice content (% by weight) vary according to an alcohol content. For example in a case of using 10 g of concentrated apple juice (Bx 70˚ = seven-fold concentration), the fruit juice content in a 100-ml beverage with 9 v/v% of alcohol (specific gravity 0.9967) is 70.2% by weight, and the fruit juice content in a 100-ml beverage with 24 v/v% of alcohol (specific gravity 0.9787) is 71.5% by weight.

To avoid an effect of an alcohol concentration in a beverage, the conversion formula below using an amount (g) of concentrated fruit juice contained in 100 ml of an alcoholic beverage is used to calculate the "percentage of fruit juice" in the alcoholic beverage in the present invention. The concentration rate is to be calculated in accordance with the JAS standard, and sugar refractometer indexes for sugar, honey, and the like that are added to fruit juice are to be excluded.

$$\text{Percentage of fruit juice (\%)} = \text{<amount of concentrated fruit juice that is contained}$$

$$\text{(g)/100 ml>} \times \text{<concentration rate>} \times 100$$

For example the percentage of fruit juice in an alcoholic beverage containing a concentrated orange juice of Bx 55˚ at a concentration of 6.0 g per 100 ml of the alcoholic beverage is 30%. Use of a concentrated fruit juice makes it possible to produce a beverage with a percentage of fruit juice that is higher than 100%. For example, the percentage of fruit juice in an alcoholic beverage containing a concentrated orange juice of Bx 55˚ at a concentration of 40.0 g per 100 ml of the alcoholic beverage is 200%.

The "percentage of fruit juice" as used in the present invention can also be expressed by indicating amino nitrogen in a beverage as an index. Specifically, the percentage of fruit juice can be expressed as a relative concentration with respect to an amount of amino nitrogen contained in a straight fruit juice, which is referred to as 100%. Amounts of amino nitrogen (mg/100 ml) in 100% fruit juices (straight fruit juice) from various concentrated fruit juices are as follows (Van Slyke method): orange: (turbid) 28 mg, (clear) 17 mg; grapefruit: (turbid) 29 mg, (semi-clear) 23 mg, (clear) 26 mg; grape: (concord) 23 mg, (white grape) 3 mg, (Kyoho grape) 18 mg; apple: (turbid) 9 mg, (clear) 7 mg; and peach: (clear) 16 mg. For example when amino nitrogen in an alcoholic beverage of the present invention made from a clear apple juice and an alcohol is analyzed (Van Slyke method) and the result is 15 mg/100 ml, the percentage of fruit juice is about 200%. An amount of amino nitrogen is generally expressed as an amount per 100 g of a beverage (mg/100 g), but an amount of amino nitrogen per 100 ml of an alcohol beverage (mg/100 ml) is used herein to avoid effects of an alcohol concentration in the beverage.

[Table 1]

| Name of fruit | Reference level of sugar refractometer index (˚Bx) | Name of fruit | Reference level of sugar refractometer index (˚Bx) |
|---|---|---|---|
| Orange | 11 | | |
| Unshiumikan (*Citrus unshiu*) | 9 | European pear (*Pyrus communis*) | 11 |
| Grapefruit | 9 | | |
| Apple | 10 | Japanese persimmon | 14 |
| Grape | 11 | Quince | 10 |
| Pineapple | 11 | Plum | 6 |
| Peach | 8 | Apricot | 7 |
| Natsumikan (*Citrus natsudaidai*) | 9 | Cranberry | 7 |
| | | Banana | 23 |
| Hassaku (*Citrus hassaku*) | 10 | Papaya | 9 |
| | | Kiwifruit | 10 |
| Iyokan (*Citrus iyo*) | 10 | Mango | 13 |
| Ponkan (*Citrus reticulata*) | 11 | Guava | 8 |
| Citrus depressa | 8 | Passion fruit | 14 |
| Japanese pear (*Pyrus pyrifolia*) | 8 | | |

[Table 2]

| Name of fruit | Reference level of acidity (%) |
|---|---|
| Lemon | 4.5 |
| Lime | 6 |
| Japanese plum | 3.5 |
| Kabosu (*Citrus sphaerocarpa*) | 3.5 |

A first feature of the present invention is that the irritant sensation of alcohol in an alcoholic beverage base of the present invention or its dilution-type beverage containing a high concentration of alcohol can be eliminated almost completely if the amount of fruit juice contained is at least 11.5 times the amount of the alcohol, based on the percentage of fruit juice. The phrase "at least 11.5 times the amount of the alcohol, based on the percentage of fruit juice" refers to a percentage of fruit juice converted in a percentage per 1 v/v% of alcohol. Specifically, the phrase refers to a composition that satisfies B/A $\geq$ 11.5, where A is an alcohol concentration (content) in an alcoholic beverage base of the present invention and B is a percentage of fruit juice (%).

Among alcoholic beverage bases that satisfy the above range, an alcoholic beverage base containing fruit juice in an amount that is at least 300%, based on the percentage of fruit juice, and is at least 19.0 times the amount of alcohol (i.e., B/A $\geq$ 19.0) is preferred, because a dilution-type fruit juice-containing alcoholic beverage with a mellow, deep, and palatable taste can be prepared with such an alcoholic beverage base. The phrase "a mellow, deep, and palatable taste" as used herein refers to a flavor that is similar to mature fruit with an increased degree of ripeness of fruit.

It is known that when fruit reaches maturity, an increase in the sugar level of fruit juice, a reduction of acid, and a decrease in bitterness generally occur to make the fruit suitable for fruit juice. On the other hand, when fruit is over matured, problems such as browning and hardening of fruit skins and discoloration occur to cause "blurred taste" and strange smell. This makes the fruit less suitable for fruit juice, and leads to a decrease in the yield of squeezed juice. In view of such problems associated with over maturation and yields, it was considered difficult to harvest and squeeze only mature fruit to obtain a mature fruit juice. A second feature of the present invention is that a dilution-type alcoholic beverage having a flavor of mature fruit can be prepared from an alcoholic beverage base of the present invention merely by addition of a high concentration of fruit juice at a specific ratio to the alcohol in the alcoholic beverage base. This flavor of mature fruit is realized only by the high concentration of alcohol, namely at least 9 v/v% of alcohol, and the fruit juice contained at the specific ratio, and cannot be realized with a low concentration of alcohol.

An upper limit of the amount of fruit juice to be added can be appropriately set according to a preference. When an excess amount of fruit juice is added, a fruit-derived turbid component in a concentrated fruit juice or a poorly-soluble component may not dissolve and cause problems such as precipitation and increase in viscosity, depending on the type of a fruit juice. Thus, an upper limit of the amount of fruit juice to be added is generally about a percentage of fruit juice of 800%, preferably about 600%, more preferably about 500%.

Either of a straight fruit juice and a concentrated fruit juice can be used as a fruit juice for use in the production of an alcoholic beverage base of the present invention, but a concentrated fruit juice is normally used to add a high concentration of fruit juice. A thermal concentration method and a freeze concentration method are generally known as methods for concentrating fruit juice to obtain a concentrated fruit juice. With a thermal concentration method, the process of concentration can be continued until a high concentration with a sugar level of 80° (Bx 80°) is obtained; however, the quality, especially savor, of fruit juice is lost due to the heating and may produce unpleasant smell. On the other hand, with a freeze-concentration method, deterioration in quality of fruit juice can be inhibited, but when the viscosity of a concentrated solution increases, it becomes impossible to separate ice to make it difficult to increase the degree of concentration to an adequate level; thus, generally only about 2- to 3-fold concentration can be obtained. Either of the thermally concentrated fruit juice and the freeze-concentrated fruit juice can be used in a concentrated fruit juice of the present invention, but the present inventors found that the tingling sensation of alcohol can be reduced or eliminated especially by use of a thermally concentrated fruit juice. The thermally concentrated fruit juice in the present invention is not particularly limited and may be any fruit juice that is thermally concentrated; a fruit juice that is concentrated at a high temperature in a short period of time is more effective. Conditions of a process for concentrating a fruit juice at a high temperature in a short period of time can be appropriately determined by a person skilled in the art; the heating is generally at 70-100°C for 2-3 minutes. This action, which uses a thermally concentrated fruit juice to reduce the tingling sensation of alcohol to improve the taste, was found by the present inventors for the first time.

As described above, when a thermally concentrated fruit juice is used in an alcoholic beverage base of the present invention, since the quality of fruit juice may be deteriorated by the heating, an excess concentration should be avoided; it is preferable to use a thermally concentrated fruit juice with a concentration rate of tenfold or below, preferably eightfold or below, more preferably sevenfold or below. As stated above, the tingling sensation of alcohol can be reduced or eliminated more effectively by use of a thermally concentrated fruit juice.

Especially when a concentrated fruit juice is used, a fruit-derived turbid component and a poorly-soluble component that are not dissolved may cause problems such as precipitation and increase in viscosity, depending on the type of a fruit juice. Thus, use of a fruit juice that is partially or completely clarified, i.e., clear fruit juice or semi-clear fruit juice, is preferred. Microfiltration, enzymatic treatment, ultrafiltration, and the like are known as clarification methods, and any of the methods can be employed to process a fruit juice.

Use of a fruit juice containing a soluble low-molecular-weight polyphenol at a specific concentration in the present invention is preferred, because the alcohol irritation can be reduced effectively. The soluble low-molecular-weight polyphenol in the present invention is as follows.

The soluble low-molecular-weight polyphenol is defined as peaks that appear in a certain retention time when a fruit juice diluted to an appropriate concentration is subjected to high-performance chromatography (HPLC). The details of the HPLC analysis are as follows.

HPLC device: HPLC-electrochemical detector Coulochem III (developed and manufactured by ESA in the U.S.A, and imported and sold by MC Medical, Inc., with an analytical cell Model 5011A, a guard cell Model 5020, and a conditioning cell Model 5021);

Column: Capcellpak C-18AQ (5 $\mu$m, inner diameter 4.6 mm x 150 mm, manufactured by Shiseido Co., Ltd.);

Mobile phase A: 40% methanol, 60% 50mM sodium acetate/water, pH 5.0; and Mobile phase B: 7% methanol, 93% 100mM sodium acetate/water, pH 5.2.

Mobile phases A and B are passed at a flow rate of 1 mL/min by use of the HPLC device and the column under the concentration gradient conditions specified in Table 3.

[Table 3]

| (Conditions of concentration gradients of HPLC mobile phases) | | |
|---|---|---|
| Time | Mobile phase A | Mobile phase B |
| 0 min. | 20% | 80% |
| 1 min. | 40% | 60% |
| 3.5 min. | 80% | 20% |
| 20 min. | 80% | 20% |
| 30 min. | 20% | 80% |
| 40 min. | 20% | 80% |

Samples are prepared by precisely weighing an adequate amount of fruit juice, diluting the fruit juice to 10 mL with mobile phases A/B = 20/80, and then filtering it using a membrane filter (hole diameter: 0.45 $\mu$m, material: PTFE, ADVANTEC). In the HPLC, 10 $\mu$L of a sample is injected.

Juice samples are subjected to HPLC analysis under the foregoing conditions. As a reference, the HPLC analysis is also carried out on an aqueous solution of gallic acid (1 mg/L) under the same conditions to measure a retention time of a gallic acid peak and a peak area of gallic acid (concentration 1 mg/L) in advance. Peaks in a chromatogram that appear within 20 minutes from a time point that corresponds to the retention time of gallic acid (about 2.4 minutes) in the HPLC analysis of the fruit juice samples are defined as a soluble low-molecular-weight polyphenol. A relative ratio calculated by dividing the total of the peak areas in the chromatograms of the fruit juice samples that are detected during the retention time by a peak area in a chromatogram of an aqueous solution of gallic acid (concentration: 1 mg/L) is converted into a straight fruit juice (percentage of fruit juice: 100%), and the value thus obtained is used as a concentration of the soluble low-molecular-weight polyphenol in the fruit juice.

Preferably, a fruit juice to be added to an alcoholic beverage of the present invention contains at least 0.9 mg/L of soluble low-molecular-weight polyphenol, based on the straight juice.

The fruit juice-derived soluble low-molecular-weight polyphenol contained in an alcoholic beverage can be easily calculated from a percentage of fruit juice in the alcoholic beverage if the concentration of the soluble low-molecular-weight polyphenol in the fruit juice based on the straight juice is clear. The concentration (mg/L) of soluble low-molecular-weight polyphenol in an alcoholic beverage is preferably 0.7 mg/L or higher and lower than 270 mg/L, more preferably 0.7 mg/L or higher and lower than 135 mg/L, even more preferably 0.7 mg/L or higher and lower than 70 mg/L.

Preferably, an alcoholic beverage of the present invention contains a specific concentration of malic acid in addition to the specific concentration of soluble low-molecular-weight polyphenol, because the tingling, irritant sensation of alcohol is further reduced. A preferred concentration of malic acid in an alcoholic beverage of the present invention is 0.15 w/v% or higher. Preferably, an alcoholic beverage of the present invention contains a specific concentration of glucose in addition to the specific concentrations of soluble low-molecular-weight polyphenol and malic acid, because the tingling sensation of alcohol is further reduced. A preferred concentration of glucose in an alcoholic beverage of the present invention is 4 w/v% or higher.

(Other components)

Sugars, acids, a flavoring, vitamins, colorants, an antioxidant, a sweetening agent, an acidulant, an emulsifier, a preservative, a flavoring agent, extracts, a pH adjuster, a quality stabilizer, or the like that are commonly added to alcohol-containing beverages may be added to an alcoholic beverage base of the present invention in addition to a fruit juice and an alcohol to an extent that the foregoing properties are not lost. As described above, an alcoholic beverage base or a dilution-type beverage of the present invention contains a high concentration of fruit juice and a high concentration of alcohol to allow a consumer to enjoy a flavor of mature fruit that was not available in the past; and even if no sweetening agent or sugar is added, sweetness derived from natural fruit, i.e., essential sweetness and deliciousness of fruit can be enjoyed. Since the essential deliciousness of fruit is to be enjoyed, it is preferable to select as other components a component that neither affects the sweetness or sourness nor provides any strange taste; specifically, it is preferable to select at least one of flavorings, colorants, antioxidants, and the like.

The pH of an alcoholic beverage of the present invention is not particularly limited, but preferably the beverage is acidic in the point of view that the beverage is to contain a high concentration of fruit juice; namely, in the point of view of maintaining palatability as a fruit based beverage. Specifically, a pH of 2.0-5.0 is preferred, and a pH of 3.0-4.5 is more preferred.

An alcoholic beverage base of the present invention may be consumed straight but is generally used as a beverage base for preparing a dilution-type alcoholic beverage and diluted when it is consumed. An alcoholic beverage base of the present invention can also be used straight as a fruit source for ice cream, yogurt, and the like, or as an ingredient (fruit base) to be added to bread, candy, and the like. In any of the forms, the tingling sensation distinctive of alcohol is eliminated almost completely.

(Production method)

An alcoholic beverage base of the present invention is prepared by mixing the alcohol and fruit juice, and other components as necessary, and storing the mixed solution for at least a certain period so that especially the tingling sensation of alcohol can be reduced or eliminated more effectively and an alcohol beverage base or its dilution-type beverage having a mellow, thick taste can be obtained.

A storage period in the step of storing varies according to the concentrations of alcohol and fruit juice in a mixed solution, a storage temperature, and the like, but is preferably at least 1 day, more preferably at least 1 week, even more preferably at least 2 weeks, especially preferably at least 3 weeks. It is considered that after a storage period exceeds a certain length, the tingling sensation of alcohol in a beverage base is not reduced any further, and the tingling sensation that is once reduced does not change substantially. Thus, there is no upper limit for the storage period. However, in view of preservation stability as a beverage base, the storage should be stopped within 3 years, preferably within 2 years, more preferably within 1 year.

The step of storing is generally carried out at a temperature of about 10°C to about 60°C, preferably room temperature. The mixed solution of fruit juice and alcohol may be tasted periodically, and the step of storing can be terminated at a point when the tingling sensation no longer changes. According to the tests, preservation at 55°C for 1 day substantially corresponds to preservation at room temperature for 1 month. Thus, those that are preserved at 55°C for 1 day may be evaluated to obtain rapid test results in an evaluation of the tingling sensation of an alcoholic beverage base of the present invention.

As long as the alcohol and the fruit juice are in a mixed state, the mixture may be in a static state or may be moved or stirred during the step of storing. To use the base as a syrup (sometimes referred to as a base for an alcoholic beverage) for a dilution-type beverage of the present invention, it is convenient to pack a mixed solution of fruit juice and alcohol in a container so that the mixed solution is stored in the container. The form of a container is not particularly limited, and a container can be provided in an ordinary form, such as a molded container having plastic as a main component, a metal can, a laminated paper container having a metal foil and plastic film layered on top of another, and a glass bottle. However, since the base is to be diluted when it is to be consumed, preferably the base is individually packed in a single-use small sealed container (e.g., a portion pack, a small bag). Several bases, especially bases of different flavors or the like, that are individually packed in small containers may be gathered for sale so that a consumer can enjoy different flavors according to a mood that the consumer is in. This is convenient. An amount of a beverage base to be packed in one container when it is to be individually packed varies according to the concentration of alcohol, the percentage of fruit juice, and a target dilution-type beverage, but is normally 10 mL to 80 mL, preferably 20 mL to 60 mL, more preferably 30 mL to 50 mL.

Diluted-type beverage

A fruit-containing alcoholic beverage (referred to as a dilution-type beverage or a diluted beverage) can be prepared by dilution of an alcoholic beverage base of the present invention with an appropriate diluting solution. After a high concentration of alcohol is mixed with a high concentration of fruit juice at a specific ratio, the mixture is stored for a certain period and thereafter diluted, whereby the tingling sensation of alcohol in the dilution-type alcoholic beverage is reduced or eliminated.

Specifically, a dilution-type alcoholic beverage of the present invention is prepared by a method comprising:

the step 1 of mixing (A) a high concentration (at least 9 v/v%) of alcohol with (B) a high concentration of fruit juice at the ratio of B/A ≥ 11.5 (preferably B/A ≥ 19.0) to obtain a mixed solution;
the step 2 of storing the mixed solution to obtain a beverage base; and
the step 3 of diluting the stored solution to obtain a dilution-type beverage.

The term "diluted beverage" or "dilution-type beverage" as used in the present invention refers to a dilution-type alcoholic beverage that is to be diluted with a diluting solution such as water when it is to be consumed. Examples include diluted beverages to be consumed at home, diluted beverages to be consumed at restaurants, and diluted beverages in vending machines. The dilution-type beverage to be consumed at home may be diluted with a diluting solution (solvent) selected by a consumer, such as water, carbonated water, juice, fruit juice, milk, yogurt drink, and tea, to a desired concentration to prepare a desired alcoholic beverage, providing a new type of tailor-made diluted beverage.

Any of the above-listed diluting solutions can be used as a diluting solution in the present invention. However, since a feature of an alcoholic beverage base or its dilution-type beverage of the present invention is that the alcohol irritation can be eliminated without deterioration of the flavor of fruit so that the flavor of fruit can be maintained even when a distilled alcoholic beverage is used, it is desirable to select a diluting solution that complements the fruit's essential flavor; specific examples include a diluting solution with which a dilution-type beverage obtained in the present invention has the same sweetness and sourness as those of raw fruit (or straight fruit juice), i.e., a diluting solution free of sugars (sweetening agent) and acids (acidulant), a dilution solution having the same levels of sweetness and sourness as those of raw fruit (or straight fruit juice), and a diluting solution free of an astringent component such as catechin; for example, water, carbonated water, milk, yogurt drink, and fruit juice are suitably used.

The degree of dilution can be determined according to the type of a diluting solution, a desired flavor, and the like. The tingling sensation distinctive of alcohol in a diluted beverage can be reduced or eliminated when the percentage of fruit juice in the diluted beverage is 80% or higher. Thus, it is desirable to dilute a beverage such that the percentage of fruit juice in the diluted beverage is 80% or higher, preferably 100% or higher.

The present invention is described in further detail in the following non-limiting Examples. A percentage of fruit juice that exceeds 100% is rounded down to the nearest ten. For example, 315% is shown as 310%.

EXAMPLE 1

A concentrated fruit juice, an alcohol, and water were mixed in amounts specified in Table 4, and the mixture was preserved (stored) at 55°C for 1 day to produce fruit juice-containing alcoholic beverage bases (alcohol concentration: 16 v/v%) with a percentage of fruit juice of 50, 80, 83, and 200%. The concentrated Valencia orange fruit juice that was used contained 1.23 mg/L of soluble low-molecular-weight polyphenol, based on straight fruit juice, and had a specific gravity of 1.31. Tingling sensation of alcohol in the resulting fruit juice-containing alcoholic beverage bases were evaluated by 4 panelists using a four-point method (4 points: no tingling sensation was sensed, 3 points: almost no tingling sensation was sensed, 2 points: tingling sensation was slightly sensed, 1 point: tingling sensation was sensed), and the results were averaged. In Comparative Example 1, a concentrated fruit juice, an alcohol, and water were mixed in amounts specified in Table 3, and the resulting mixture was consumed immediately after the mixing to carry out sensory evaluation on the mixture, i.e., a fruit juice-containing alcoholic beverage base that was produced without a step of storage. In Comparative Example 2, the same tests were carried out using straight fruit juices with the percentages of fruit juice 50, 80 and 83% in place of concentrated fruit juices.

The results are shown in Table 4. As it is apparent from Table 4, more tingling sensation of the alcoholic beverage base with the percentage of fruit juice of at least 80% was reduced than that of the alcoholic beverage base with the percentage of fruit juice of 50%. The results of the evaluation indicate that almost no tingling sensation was sensed especially from the alcoholic beverage base with the percentage of fruit of 200%, i.e. the proportion of fruit juice with respect to alcohol was 12.5-fold, based on the percentage of fruit juice (B/A).

A comparison with the results in Comparative Example 1 suggests that more tingling sensation was reduced in the alcoholic beverage base produced through a step of storage in the case of alcoholic beverage bases having the percentage of fruit juice of 80% or higher. The results of Comparative Example 2 suggest that more tingling sensation in the concentrated fruit juice was reduced than that in the straight fruit juice in the case of the alcoholic beverage bases having the percentage of fruit juice of 80% or higher.

[Table 4]

| | Percentage of fruit juice 50% | 80% | 83% | 200% |
|---|---|---|---|---|
| B: Concentrated Valencia orange fruit juice (six-fold concentration) | 8.67 g | 14.1 g | 14.6 g | 37.2 g |
| Straight fruit juice | 50 g | 80 g | 83 g | - |
| A: Alcohol (95%) | 16.8 ml | | | |
| Water | Adequate amount (total amount 100 ml) | | | |
| B/A | 3.1 | 5.0 | 5.1 | 12.5 |
| Sensory Evaluation | 1.25 | 3.0 | 3.0 | 3.5 |
| Sensory Evaluation (Comparative Example 1) | 1.25 | 2.25 | 2.25 | 2.5 |
| Sensory Evaluation (Comparative Example 2) | 1.25 | 2.0 | 2.0 | - |

EXAMPLE 2

A concentrated white grape juice was mixed with an alcohol in amounts specified in Table 5, and water was added such that the total amount of the resulting mixture was 1000 mL. The mixture was packed into a sealed container (glass bottle) and preserved (stored) at room temperature for 1 day to produce fruit juice-containing alcoholic beverage bases with an alcohol concentration of 9-30 v/v% and a percentage of fruit juice of about 230, 310, 430, and 520%.

Amounts of amino nitrogen in the alcoholic beverage bases were measured by a Van Slyke method (a method in which sodium nitrite, acetic acid, and a sample solution are charged in a van slyke instrument to produce nitrogen gas, and an amount of amino nitrogen is determined from the amount of produced nitrogen gas). Sensory evaluation was carried out to evaluate the tingling sensation of alcohol. The evaluation was carried out using the following ranks based on Comparative Example 1 (percentage of fruit juice 200%) in Example 1 as a reference: "X" for a case in which more tingling sensation than the reference was sensed; "△' for a case in which the level was the same as that of the reference; "○" for a case in which less tingling sensation than the reference was sensed, and "◎" for a case in which little tingling sensation was felt (absolute evaluation: "○" for a case in which little tingling sensation was sensed; and "◎"for a case in which no tingling sensation was sensed).

The results are shown in Table 5. The alcohol irritation of the beverage base containing a high concentration of alcohol of at least 9 v/v% could be eliminated almost completely by addition of fruit juice in an amount that was at least 11.5 times the amount of the alcohol, based on the percentage of fruit juice. No tingling sensation was sensed especially from the alcohol beverage base containing fruit juice in an amount that was at least 300%, based on the percentage of fruit juice, and at least 19.0 times the amount of the alcohol (B/A≥19.0); the combination of the fruit juice and the alcohol gave the alcoholic beverage base a flavor of something like mature fruit.

[Table 5]

| Alcohol (95°) | Amount contained | Alcohol concentration (A) | Clear concentrated white grape juice Bx 66 (six-fold concentration) | | | |
|---|---|---|---|---|---|---|
| | | | Amount contained 390 g | 525 g | 720 g | 870 g |
| | | | Percentage of fruit juice (B) 230% | 310% | 430% | 520% |
| | | | Amino nitrogen 8 mg/100 mL | 12 mg/100 mL | 16 mg/100 mL | 19 mg/100 mL |
| | 315.8 ml | 30 v/v% | × 7.67 | × 10.3 | △ 14.3 | — N.D. |
| | 294.7 ml | 28 v/v% | △ 8.21 | △ 11.1 | ○ 15.4 | ○ 18.6 |
| | 252.7 ml | 24 v/v% | △ 9.58 | ○ 12.9 | ○ 17.9 | ◎ 21.7 |
| | 210.6 ml | 20 v/v% | ○ 11.5 | ○ 15.5 | ◎ 21.5 | ◎ 26.0 |
| | 168.5 ml | 16 v/v% | ○ 14.4 | ◎ 19.3 | ◎ 26.9 | ◎ 32.5 |
| | 126.4 ml | 12 v/v% | ○ 19.2 | ◎ 25.8 | ◎ 35.8 | ◎ 43.3 |
| | 94.8 ml | 9 v/v% | ○ 25.6 | ◎ 34.4 | ◎ 47.8 | ◎ 57.8 |

(*the numbers on the lower sections in the table indicate values of B/A)

EXAMPLE 3

The procedure of Example 2 was repeated, except that an apple juice specified in Table 6 was used as the fruit juice, to produce fruit juice-containing alcoholic beverage bases, and the resulting bases were evaluated as in Example 2. The results are shown in Table 6. The alcohol irritation of the beverage base containing a high concentration of alcohol of at least 9 v/v% could be eliminated almost completely by addition of fruit juice in an amount that was at least 11.5 times the amount of the alcohol, based on the percentage of fruit juice (B/A ≥ 11.5). No tingling sensation was sensed especially from the alcohol beverage base containing the fruit juice in an amount that was at least 300%, based on the percentage of fruit juice, and at least 19.0 times the amount of the alcohol (B/A ≥ 19.0); the combination of the fruit juice and the alcohol gave the alcoholic beverage base a flavor of something like mature fruit.
[Table 6]

| Alcohol (95°) | Amount contained | Alcohol concentration (A) | Clear concentrated apple juice Bx 70 (seven-fold concentration) | | | |
|---|---|---|---|---|---|---|
| | | | Amount contained 335 g | 450 g | 615 g | 745 g |
| | | | Percentage of fruit juice (B) 230% | 310% | 430% | 520% |
| | | | Amino nitrogen 17 mg/100 mL | 24 mg/100 mL | 32 mg/100 mL | 39 mg/100 mL |
| | 315.8 ml | 30 v/v% | ×   7.67 | ×   10.3 | △   14.3 | —   N.D. |
| | 294.7 ml | 28 v/v% | △   8.21 | △   11.1 | ○   15.4 | ○   18.6 |
| | 252.7 ml | 24 v/v% | △   9.58 | ○   12.9 | ○   17.9 | ◎   21.7 |
| | 210.6 ml | 20 v/v% | ○   11.5 | ○   15.5 | ◎   21.5 | ◎   26.0 |
| | 168.5 ml | 16 v/v% | ○   14.4 | ◎   19.3 | ◎   26.9 | ◎   32.5 |
| | 126.4 ml | 12 v/v% | ○   19.2 | ◎   25.8 | ◎   35.8 | ◎   43.3 |
| | 94.8 ml | 9 v/v% | ○   25.6 | ◎   34.4 | ◎   47.8 | ◎   57.8 |

(*the numbers on the lower sections in the table indicate values of B/A)

EXAMPLE 4

The procedure of Example 2 was repeated, except that a grapefruit juice specified in Table 7 was used as the fruit juice, to produce fruit juice-containing alcoholic beverage bases, and the resulting bases were evaluated. The results are shown in Table 7. The alcohol irritation of the beverage base containing a high concentration of alcohol of at least 9 v/v% could be eliminated almost completely by addition of the fruit juice in an amount that was at least 11.5 times the amount of the alcohol, based on the percentage of fruit juice (B/A $\geq$ 11.5). No tingling sensation was sensed especially from the alcohol beverage base containing the fruit juice in an amount that was at least 300%, based on the percentage of fruit juice, and at least 19.0 times the amount of the alcohol (B/A $\geq$ 19.0); the combination of the fruit juice and the alcohol gave the alcoholic beverage base a flavor of something like mature fruit.
[Table 7]

| Alcohol (95°) | | | Clear concentrated grapefruit juice Bx 63 (seven-fold concentration) | | | |
|---|---|---|---|---|---|---|
| | | | Amount contained 335 g | 440 g | 625 g | 745 g |
| | | | Percentage of fruit juice (B) 230% | 310% | 430% | 520% |
| | | | Amino nitrogen 66 mg/100 mL | 89 mg/100 mL | 124 mg/100 mL | 148 mg/100 mL |
| | Amount contained | Alcohol concentration (A) | ×   7.67 | ×   10.3 | △   14.3 | —   N.D. |
| | 315.8 ml | 30 v/v% | | | | |
| | 294.7 ml | 28 v/v% | △   8.21 | △   11.1 | ○   15.4 | ○   18.6 |
| | 252.7 ml | 24 v/v% | △   9.58 | ○   12.9 | ○   17.9 | ◎   21.7 |
| | 210.6 ml | 20 v/v% | ○   11.5 | ○   15.5 | ◎   21.5 | ◎   26.0 |
| | 168.5 ml | 16 v/v% | ○   14.4 | ◎   19.3 | ◎   26.9 | ◎   32.5 |
| | 126.4 ml | 12 v/v% | ○   19.2 | ◎   25.8 | ◎   35.8 | ◎   43.3 |
| | 94.8 ml | 9 v/v% | ○   25.6 | ◎   34.4 | ◎   47.8 | ◎   57.8 |

(*the numbers on the lower sections in the table indicate values of B/A)

EXAMPLE 5

Various concentrated fruit juices (grapefruit, apple, Kyoho grape, white grape, peach) specified in Table 8 were mixed with an alcohol to prepare an alcoholic beverage base (a) having a percentage of fruit juice of about 160% and an alcoholic beverage base (b) having a percentage of fruit juice of about 200%. The various concentrated fruit juices (grapefruit, apple, Kyoho grape, white grape, peach) that were used contained 17.80 mg/L, 14.61 mg/L, 33.32 mg/L, 0.93 mg/L, and 1.30 mg/L, based on straight juice, of soluble low-molecular-weight polyphenol, respectively. The specific gravities were 1.23,1.35, 1.26, 1.35, and 1.3, respectively. Each of the beverage bases (100 mL) was packed into a small sealed container (glass bottle) and preserved (stored) at room temperature for 2 weeks. After the preservation, the entire beverage base (100 mL) was poured into a glass, and water was added so that the total amount was 200 mL, whereby dilution-type alcoholic beverages with the percentage of fruit juice of about 80% and about 100% were prepared. When the beverages were consumed and evaluated, no tingling sensation of alcohol was sensed from any of the beverages; the flavors of the alcohol and the fruit in the beverages harmonized with each other to make the beverages delicious and drinkable.

The preserved beverage bases were consumed straight, but no tingling sensation of alcohol was sensed, and the combination of the fruit juice and the alcohol in the alcoholic beverages produced a flavor of something like mature fruit. The ratio of (B) fruit juice to (A) alcohol, i.e., B/A, was calculated; about 20 for the beverage base (a) and about 25 for the beverage base (b).

[Table 8]

| | Grapefruit | | Apple | | Kyoho grape | | White grape | | Peach | |
|---|---|---|---|---|---|---|---|---|---|---|
| | a fruit juice | b | a | b | a | b | a | b | a | b |
| Clear concentrated grapefruit juice (Bx45) | 33.0 g | 41.2 g | - | - | - | - | - | - | - | - |
| Clear concentrated apple juice (Bx70) | - | - | 24.0 g | 30.0 g | - | - | - | - | - | - |
| Clear concentrated Kyoho grape juice (Bx55) | - | - | - | - | 33.0 g | 41.2 g | - | - | - | - |
| Clear concentrated white grape juice (Bx66) | - | - | - | - | - | - | 27.6 g | 34.4 g | - | - |
| Clear concentrated peach juice (Bx40) | - | - | - | - | - | - | - | - | 33.0 g | 41.2 g |
| Alc (95%) | 8.4 ml | 8.4 ml | 8.4 ml | 8.4 ml | 8.4 ml | 8.4 ml | 8.4 ml | 8.4 ml | 8.4 ml | 8.4 ml |

(continued)

| | Grapefruit | | Apple | | Kyoho grape | | White grape | | Peach | |
|---|---|---|---|---|---|---|---|---|---|---|
| | a fruit juice | b | a | b | a | b | a | b | a | b |
| Water | Adequate amount (total amount 100 ml) | | | | | | | | | |

*Percentage of fruit juice: grapefruit a 33.0 g x 5 (Bx 45; five-fold concentrated fruit juice) = 165%
Percentage of fruit juice: grapefruit b 41.2 g x 5 = 206%
Percentage of fruit juice: apple a 24.0 g x 7 (Bx 70; seven-fold concentrated fruit juice) = 168%
Percentage of fruit juice: apple b 30.0 g x 7 = 210%
Percentage of fruit juice: Kyoho grape a 33.0 g x 5 (Bx 45; five-fold concentrated fruit juice) = 165%
Percentage of fruit juice: Kyoho grape b 41.2 g x 5 = 206%
Percentage of fruit juice: white grape a 27.6 g x 6 (Bx 66; six-fold concentrated fruit juice) = 166%
Percentage of fruit juice: white grape b 34.4 g x 6 = 206%
Percentage of fruit juice: peach a 33.0 g x 5 (Bx 45; five-fold concentrated fruit juice) =165%
Percentage of fruit juice: peach b 41.2 g x 5 = 206%

EXAMPLE 6

Various concentrated fruit juices (grapefruit, apple, white grape) specified in Table 9 were mixed with an alcohol to prepare alcoholic beverage bases with a percentage of fruit juice of 430% and an alcohol concentration of 16 v/v%. Each of the beverage bases (100 mL) was packed into a small sealed container (glass bottle) and preserved (stored) at room temperature for 1 day (present invention). Further, a beverage base having a sugar level and an acidity equivalent to those in the present invention was prepared using granulated sugar and citric acid in place of fruit juice (Comparative Example).

These alcoholic beverage bases were consumed to carry out sensory evaluation. Further, each of the beverage bases was diluted four-fold with water to prepare dilution-type alcoholic beverages having an alcohol concentration of 4 v/v%, and the resulting beverages were consumed to carry out sensory evaluation.

The results are shown in Table 9. The results suggest that the tingling sensation was reduced or eliminated more significantly in the present invention using fruit juice than in the Comparative Example (solution with a sugar and an acid). Note that the ratio (B/A) of the fruit juice (B) to the alcohol (A) in the present invention was 26.9.

[Table 9]

| | Grapefruit | | Apple | | White grape | |
|---|---|---|---|---|---|---|
| | Present Invention | Comparative Example | Present Invention | Comparative Example | Present Invention | Comparative Example |
| Clear concentrated grapefruit juice (Bx45) | 625 g | - | - | - | - | - |
| Clear concentrated apple juice (Bx70) | - | - | 615 g | - | - | - |
| Clear concentrated white grape juice (Bx66) | - | - | - | - | 615 g | - |
| Granulated sugar | - | 393.8 g | - | 430.5 g | - | 475 g |
| Citric acid | - | 45 g | - | 8.44 g | - | 14.75 g |
| Alc (95%) | 168.5 ml | 168.5 ml | 168.5 ml | 168.5 ml | 168.5 ml | 168.5 ml |
| Water | Adequate amount (total amount 1000 ml) | | | | | |
| Bx | 39.9˚ | 39.9˚ | 42.8˚ | 42.8˚ | 44.9˚ | 44.9˚ |
| Acidity (/100 ml) | 0.45 g | 0.45 g | 0.85 g | 0.85 g | 14.75 g | 14.75 g |
| Amino nitrogen (/100 ml) | 124 mg | - | 32 mg | - | 16 mg | 1.4.75 g |
| Alc | 16 v/v% | 16 v/v% | 16 v/v% | 16 v/v% | 16 v/v% | 16 v/v% |
| Sensory Evaluation 1 (Alc 16 v/v%) | No tingling sensation | Slight tingling sensation when it was taken into the mouth | No tingling sensation | Slight tingling sensation when it was taken into the mouth | No tingling sensation | Slight tingling sensation when it was taken into the mouth |
| Sensory Evaluation 2 (Alc 4 v/v%) | Almost no tingling sensation | Slight tingling sensation when it was taken into the mouth and passed through the throat | Almost no tingling sensation | Slight tingling sensation when it was taken into the mouth and passed through the throat | Almost no tingling sensation | Slight tingling sensation when it was taken into the mouth and passed through the throat |

EXAMPLE 7

A grapefruit juice-containing alcoholic beverage base with a percentage of fruit juice of 430% and an alcohol concentration of 16 v/v% was prepared according to the composition specified in Table 9 of Example 6. One hundred milliliters of the alcoholic beverage was diluted with 300 mL of various diluting solutions (commercially-available carbonated water, commercially-available yogurt drink, and commercially-available milk) to obtain dilution-type alcoholic beverages.

When these dilution-type alcoholic beverages were consumed and evaluated, no alcohol irritation was sensed from any of the beverages; all of the beverages were significantly drinkable and delicious. Especially the beverage diluted with carbonated water (beverage with soda) was a carbonated alcoholic beverage having an irritation of carbonic acid as well as the depth of the fruit juice and alcohol to allow a consumer to enjoy the presence of rich fruit that was not available in the past. The beverage diluted with a yogurt drink (beverage with yogurt) was a rich yogurt drink that was not available in the past, as the savor of the yogurt was synergistically complemented by the alcohol and the fruit. The beverage diluted with milk (beverage with milk) was a milk-containing alcoholic beverage that was not available in the past, as the alcohol complemented the rich, mellow tastes of the milk and the fruit juice.

Reference Example

Aqueous solutions of alcohol with an alcohol content of 12 v/v% comprising fruit-derived polyphenol, malic acid, and glucose components either singly or in combination in amounts specified in Tables 10-14 were prepared. A commercially-available fruit-derived polyphenol was used, and the total amount of polyphenol was measured by a colorimetric method.

(Colorimetric method - analysis of total amount of polyphenol)

In a test tube, 8.3 mL of pure water and 0.2 mL of a sample were mixed together and stirred well to be uniform, and 0.5 mL of a phenol reagent that was diluted double with pure water was added. Within 5 minutes after the addition, 1 mL of an aqueous solution of 10% anhydrous sodium carbonate was added, and the mixture was immediately stirred to be uniform. Then, the resulting mixture was reacted at 30˚C for 30 minutes. After the reaction was completed, the absorbance of the reaction solution at 760 nm was measured with a spectrophotometer. Quantification was carried out by repeating the same procedure as that described above using gallic acid monohydrate to form an analytical curve.

(Sensory Evaluation)

These aqueous solutions of alcohol with the alcohol content of 12 v/v% were consumed to carry out sensory evaluation on the tingling sensation (irritant sensation) of alcohol. The absolute sensory evaluation was carried out by three trained panelists to determine the presence/absence of tingling sensation of alcohol as shown below.

◎: No tingling sensation originating from alcohol irritation was sensed.
○: Almost no tingling sensation originating from alcohol irritation was sensed.
△: Slight tingling sensation originating from alcohol irritation was sensed.
✕: Strong tingling sensation originating from alcohol irritation was sensed.

Tables 10-14 show total amounts of polyphenol, amounts of malic acid, and amounts of glucose contained in the respective samples, and the results of the sensory evaluation about the tingling sensation of alcohol.
[Table 10]

| Sample No. | 1 | 2 | 3 | 4 | 5 | 6 | 7 |
|---|---|---|---|---|---|---|---|
| (Reduction of tingling sensation by fruit-derived polyphenol alone) | | | | | | | |

(continued)

| Sample No. | | 1 | 2 | 3 | 4 | 5 | 6 | 7 |
|---|---|---|---|---|---|---|---|---|
| Composition | Alcohol (95 v/v%) (mL) | 12.7 | 12.7 | 12.7 | 12.7 | 12.7 | 12.7 | 12.7 |
| | Fruit-derived polyphenol (mg) | 0 | 18.7 | 37.4 | 74.8 | 149.6 | 374 | 1496 |
| | (Water was added such that the total amount of the resulting mixture was 100 mL) | | | | | | | |
| Values analyzed and results of sensory evaluation | | 1 | 2 | 3 | 4 | 5 | 6 | 7 |
| | Alcohol content (v/v%) | 12 | 12 | 12 | 12 | 12 | 12 | 12 |
| | Total amount of polyphenol (mg/ 100 mL) | 0 | 7.1 | 14.2 | 28.4 | 56.8 | 142 | 426 |
| | Tingling sensation of alcohol | × | × | Δ | Δ | Δ | ○ | ◎ |

[Table 11]

| Sample No. | | 8 | 9 | 10 | 11 | 12 | 13 | 14 |
|---|---|---|---|---|---|---|---|---|
| (Reduction of tingling sensation by malic acid alone) | | | | | | | | |
| Composition | Alcohol (95 v/v%) (mL) | 12.7 | 12.7 | 12.7 | 12.7 | 12.7 | 12.7 | 12.7 |
| | Malic acid (mg) | 0 | 24.2 | 48.3 | 96.6 | 193.2 | 483 | 1932 |
| | (Water was added such that the total amount of the resulting mixture was 100 mL) | | | | | | | |
| Values analyzed and results of sensory evaluation | | 8 | 9 | 10 | 11 | 12 | 13 | 14 |
| | Alcohol content (v/v%) | 12 | 12 | 12 | 12 | 12 | 12 | 12 |
| | Malic acid (mg/ 100 mL) | 0 | 0.0242 | 0.0483 | 0.0966 | 0.1932 | 0.483 | 1.932 |
| | Tingling sensation of alcohol | × | Δ | Δ | Δ | Δ | Δ | Δ |

[Table 12]

| Sample No. | | 15 | 16 | 17 | 18 | 19 | 20 | 21 |
|---|---|---|---|---|---|---|---|---|
| (Reduction of tingling sensation by glucose alone) | | | | | | | | |
| Composition | Alcohol (95 v/v%) (mL) | 12.7 | 12.7 | 12.7 | 12.7 | 12.7 | 12.7 | 12.7 |
| | Glucose (mg) | 0 | 1.3 | 2.6 | 5.2 | 10.4 | 26 | - |
| | (Water was added such that the total amount of the resulting mixture was 100 mL) | | | | | | | |

(continued)

| Sample No. | | 15 | 16 | 17 | 18 | 19 | 20 | 21 |
|---|---|---|---|---|---|---|---|---|
| Values analyzed and results of sensory evaluation | | 15 | 16 | 17 | 18 | 19 | 20 | 21 |
| | Alcohol content (v/v%) | 12 | 12 | 12 | 12 | 12 | 12 | 12 |
| | Glucose (mg/ 100 mL) | 0 | 1.3 | 2.6 | 5.2 | 10.4 | 26 | - |
| | Tingling sensation of alcohol | × | × | Δ | Δ | Δ | Δ | Not available |

[Table 13]

| Sample No. | | 22 | 23 | 24 | 25 | 26 | 27 | 28 |
|---|---|---|---|---|---|---|---|---|
| (Reduction of tingling sensation by a combination of fruit-derived polyphenol and malic acid) | | | | | | | | |
| Composition | Alcohol (95 v/v%) (mL) | 12.7 | 12.7 | 12.7 | 12.7 | 12.7 | 12.7 | 12.7 |
| | Fruit-derived polyphenol (mg) | 0 | 18.7 | 37.4 | 74.8 | 149.6 | 374 | 1496 |
| | Malic acid (mg) | 0 | 24.2 | 48.3 | 96.6 | 193.2 | 483 | 1932 |
| | (Water was added such that the total amount of the resulting mixture was 100 mL) | | | | | | | |
| Values analyzed and results of sensory evaluation | | 22 | 23 | 24 | 25 | 26 | 27 | 28 |
| | Alcohol content (v/v%) | 12 | 12 | 12 | 12 | 12 | 12 | 12 |
| | Total amount of polyphenol (mg/100 mL) | 0 | 7.1 | 14.2 | 28.4 | 56.8 | 142 | 426 |
| | Malic acid (mg/ 100 mL) | 0 | 0.0242 | 0.0483 | 0.0966 | 0.1932 | 0.483 | 1.932 |
| | Tingling sensation of alcohol | × | Δ | Δ | Δ | ○ | ◎ | ◎ |

[Table 14]

| Sample No. | 29 | 30 | 31 | 32 | 33 | 34 | 35 |
|---|---|---|---|---|---|---|---|
| (Reduction of tingling sensation by a combination of fruit-derived polyphenol, malic acid, and glucose) | | | | | | | |

(continued)

| Sample No. | | 29 | 30 | 31 | 32 | 33 | 34 | 35 |
|---|---|---|---|---|---|---|---|---|
| Composition | Alcohol (95 v/v%) (mL) | 12.7 | 12.7 | 12.7 | 12.7 | 12.7 | 12.7 | 12.7 |
| | Fruit-derived polyphenol (mg) | 0 | 18.7 | 37.4 | 74.8 | 149.6 | 374 | 1496 |
| | Malic acid (mg) | 0 | 24.2 | 48.3 | 96.6 | 193.2 | 483 | 1932 |
| | glucose (mg) | 0 | 1.3 | 2.6 | 5.2 | 10.4 | 26 | - |
| | (Water was added such that the total amount of the resulting mixture was 100 mL) | | | | | | | |
| Values analyzed and results of sensory evaluation | | 29 | 30 | 31 | 32 | 33 | 34 | 35 |
| | Alcohol content (v/v%) | 12 | 12 | 12 | 12 | 12 | 12 | 12 |
| | Total amount of polyphenol (mg/100 mL) | 0 | 7.1 | 14.2 | 28.4 | 56.8 | 142 | 426 |
| | Malic acid (mg/ 100 mL) | 0 | 0.0242 | 0.0483 | 0.0966 | 0.1932 | 0.483 | 1.932 |
| | Glucose (mg/ 100 mL) | 0 | 1.3 | 2.6 | 5.2 | 10.4 | 26 | - |
| | Tingling sensation of alcohol | ✕ | Δ | Δ | ○ | ◎ | ◎ | Not available |

The results of the sensory evaluation show that the tingling sensation of alcohol was slightly sensed from the alcoholic beverage containing the fruit-derived polyphenol alone in an amount of 56.8 mg/100 mL (alcoholic beverage) or smaller. The tingling sensation of alcohol was hardly sensed from the alcoholic beverage containing the polyphenol in an amount of 142 mag/100 mL (alcoholic beverage) or larger. The effect for the reduction of the tingling sensation of alcohol was recognized. (Table 10)

The effect for the reduction was slightly sensed from the beverage containing the malic acid alone, but was not as significant as that produced by the fruit-derived polyphenol, and the tingling sensation of alcohol was slightly sensed from the beverage containing 1.932 w/v% of malic acid. (Table 11)

No significant effect for the reduction in the tingling sensation of alcohol was sensed from the beverage containing the glucose alone, but an improvement in drinkability by the masking was recognized. (Table 12)

The combination of the fruit-derived polyphenol and the malic acid had a synergy. Almost no tingling sensation of alcohol was sensed from the alcoholic beverage containing 56.8 mg/100 mL (alcoholic beverage) of polyphenol and 0.1932 w/v% (alcoholic beverage) of malic acid. No tingling sensation of alcohol was sensed from the beverage containing 142 mg/100 mL (alcoholic beverage) of polyphenol, and 0.483 w/v% or more (alcoholic beverage) of malic acid. (Table 13)

The combination of the fruit-derived polyphenol and the malic acid with the glucose had an increased effect for the reduction in tingling sensation. Almost no tingling sensation of alcohol was sensed from the alcoholic beverage containing 28.4 mg/100 mL (alcoholic beverage) of polyphenol, 0.0966 w/v% (alcoholic beverage) of malic acid, and 5.2 w/v% (alcoholic beverage) of glucose. No tingling sensation of alcohol was sensed from the beverage containing 56.8 mg/100 mL (alcoholic beverage) of polyphenol, 0.483 w/v% (alcoholic beverage) of malic acid, and 10.4 w/v% (alcoholic beverage) or more of glucose. (Table 14)

**Claims**

1.    A fruit juice-containing alcoholic beverage base comprising at least 9 v/v% of an alcohol and one or more kinds of fruit juice, wherein the fruit juice is contained in an amount that is at least 11.5 times an amount of the alcohol, based on a percentage of fruit juice.

2.    The fruit juice-containing alcoholic beverage base of Claim 1, wherein the fruit juice is contained in an amount that is at least 300%, based on a percentage of fruit juice, and is at least 19.0 times the amount of the alcohol, based on a percentage of fruit juice.

**3.** The fruit juice-containing alcoholic beverage base of Claim 1 or 2, wherein the fruit juice is a thermally concentrated fruit juice.

**4.** The fruit juice-containing alcoholic beverage base of any one of Claims 1-3, wherein at least a part of the fruit juice has been subjected to clarification treatment.

**5.** The fruit juice-containing alcoholic beverage base of any one of Claims 1-4, wherein the alcohol is a distilled alcohol.

**6.** The fruit juice-containing alcoholic beverage base of any one of Claims 1-5 produced by a method comprising: the step 1 of mixing an alcohol with one or more kinds of fruit juice to obtain a mixed solution; and the step 2 of storing the mixed solution for at least 1 day.

**7.** The fruit juice-containing alcoholic beverage base of Claim 6, wherein the method further comprises between the steps 1 and 2 the step 3 of packing the mixed solution into a container.

**8.** A dilution-type alcoholic beverage produced by mixing the fruit juice-containing alcoholic beverage base of any one of Claims 1-7 with a diluting solution.

**9.** The dilution-type alcoholic beverage of Claim 8 having a percentage of fruit juice of 80% or higher.

**10.** The dilution-type alcoholic beverage wherein the diluting solution is water or carbonated water.


**Amended claims under Art. 19.1 PCT**

**1.** A fruit juice-containing alcoholic beverage base comprising at least 9 v/v% of an alcohol and one or more kinds of fruit juice, wherein the fruit juice is contained in an amount that is at least 11.5 times an amount of the alcohol, based on a percentage of fruit juice.

**2.** The fruit juice-containing alcoholic beverage base of Claim 1, wherein the fruit juice is contained in an amount that is at least 300%, based on a percentage of fruit juice, and is at least 19.0 times the amount of the alcohol, based on a percentage of fruit juice.

**3.** The fruit juice-containing alcoholic beverage base of Claim 1 or 2, wherein the fruit juice is a thermally concentrated fruit juice.

**4.** The fruit juice-containing alcoholic beverage base of any one of Claims 1-3, wherein at least a part of the fruit juice has been subjected to clarification treatment.

**5.** The fruit juice-containing alcoholic beverage base of any one of Claims 1-4, wherein the alcohol is a distilled alcohol.

**6.** The fruit juice-containing alcoholic beverage base of any one of Claims 1-5 produced by a method comprising: the step 1 of mixing an alcohol with one or more kinds of fruit juice to obtain a mixed solution; and the step 2 of storing the mixed solution for at least 1 day.

**7.** The fruit juice-containing alcoholic beverage base of Claim 6, wherein the method further comprises between the steps 1 and 2 the step 3 of packing the mixed solution into a container.

**8.** A dilution-type alcoholic beverage produced by mixing the fruit juice-containing alcoholic beverage base of any one of Claims 1-7 with a diluting solution.

**9.** The dilution-type alcoholic beverage of Claim 8 having a percentage of fruit juice of 80% or higher.

**10.** (Amended) The dilution-type alcoholic beverage of Claim 8 wherein the diluting solution is water or carbonated water.

## INTERNATIONAL SEARCH REPORT

| International application No. |
| --- |
| PCT/JP2008/063580 |

A.   CLASSIFICATION OF SUBJECT MATTER
*C12G3/04*(2006.01)i, *A23L1/222*(2006.01)i

According to International Patent Classification (IPC) or to both national classification and IPC

B.   FIELDS SEARCHED

Minimum documentation searched (classification system followed by classification symbols)
C12G3/04, A23L1/222

Documentation searched other than minimum documentation to the extent that such documents are included in the fields searched

Electronic data base consulted during the international search (name of data base and, where practicable, search terms used)
BIOSIS/Foodline/Foods Adlibra/Food Science and Technology Abstracts/
WPI(DIALOG), JSTPlus(JDream2)

C.   DOCUMENTS CONSIDERED TO BE RELEVANT

| Category* | Citation of document, with indication, where appropriate, of the relevant passages | Relevant to claim No. |
| --- | --- | --- |
| Y | JP 2005-95068 A  (Choya Umeshu Co., Ltd.), 14 April, 2005 (14.04.05), (Family: none) | 1-9 |
| Y | JP 2004-80 A  (Asahi Breweries, Ltd.), 08 January, 2004 (08.01.04), (Family: none) | 1-9 |
| Y | Masashi HOJO et al., "Shochu Jukusei ni Tsuite no Kenkyu", Kochi University Kokusai· Chiiki Renkei Center Kenkyu Seika Hokokusho, 2005.10, No.3, pages 39, 41 to 72 | 1-9 |
| A | JP 2006-271273 A  (Suntory Ltd.), 12 October, 2006 (12.10.06), (Family: none) | 1-9 |

[X] Further documents are listed in the continuation of Box C.          [ ] See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered    to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 09 October, 2008 (09.10.08) | Date of mailing of the international search report 21 October, 2008 (21.10.08) |
| --- | --- |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

| International application No. |
|---|
| PCT/JP2008/063580 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 8-224075 A  (San-Ei Gen F.F.I., Inc.), 03 September, 1996 (03.09.96), (Family: none) | 1-9 |
| A | JP 2003-289824 A  (Nihon Shokuhin Kako Co., Ltd.), 14 October, 2003 (14.10.03), (Family: none) | 1-9 |
| A | JP 2003-204779 A  (Nippon Beet Sugar Mfg. Co., Ltd.), 22 July, 2003 (22.07.03), (Family: none) | 1-9 |
| A | JP 10-313849 A  (Yugen Kaisha Dezaina Fuzu Kyokai), 02 December, 1998 (02.12.98), (Family: none) | 1-9 |
| A | JP 2005-192473 A  (Takara Shuzo Co., Ltd.), 21 July, 2005 (21.07.05), (Family: none) | 1-9 |
| A | JP 2003-210154 A  (Mann's Wine Co., Ltd.), 29 July, 2003 (29.07.03), (Family: none) | 1-9 |
| A | JP 2002-253199 A  (Kohjin Co., Ltd.), 10 September, 2002 (10.09.02), (Family: none) | 1-9 |
| A | JP 2001-258542 A  (Chuko Awamori Distillery Co., Ltd.), 25 September, 2001 (25.09.01), (Family: none) | 1-9 |
| A | JP 8-283121 A  (Kanebo, Ltd.), 29 October, 1996 (29.10.96), (Family: none) | 1-9 |
| A | JP 8-188791 A  (Pola Chemical Industries Inc.), 23 July, 1996 (23.07.96), (Family: none) | 1-9 |
| A | JP 8-187277 A  (Pola Chemical Industries Inc.), 23 July, 1996 (23.07.96), (Family: none) | 1-9 |
| A | JP 3-101690 A  (Kanebo, Ltd.), 26 April, 1991 (26.04.91), (Family: none) | 1-9 |

Form PCT/ISA/210 (continuation of second sheet) (April 2007)

**INTERNATIONAL SEARCH REPORT**

| International application No. |
| --- |
| PCT/JP2008/063580 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 63-160573 A  (Mitsubishi Chemical Industries Ltd.),<br>04 July, 1988 (04.07.88),<br>(Family: none) | 1-9 |

Form PCT/ISA/210 (continuation of second sheet) (April 2007)

**INTERNATIONAL SEARCH REPORT**

| International application No. |
| --- |
| PCT/JP2008/063580 |

---

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III    Observations where unity of invention is lacking (Continuation of item 3 of first sheet)**

This International Searching Authority found multiple inventions in this international application, as follows:
   See extra sheet.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.    Consequently, this international search report is restricted to the invention first mentioned in the claims; it is covered by claims Nos.:
   1-9

**Remark on Protest**    ☐ The additional search fees were accompanied by the applicant's protest and, where applicable,
the                     payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**INTERNATIONAL SEARCH REPORT**

International application No.

PCT/JP2008/063580

<u>Continuation of Box No.III of continuation of first sheet(2)</u>

The invention of claim 1 relates to "a fruit-juice-containing alcoholic beverage base comprising 9 v/v% or more of an alcohol and a fruit juice, wherein the fruit juice is contained in an amount of 11.5 times or more the amount of the alcohol in terms of fruit juice content", and the invention of claim 10 relates to "a diluted alcoholic beverage, wherein a diluting solution is water or a carbonated water". However, a diluted alcoholic beverage is well-known to persons skilled in the art at the time of filing the present application, as disclosed in Document 1 shown below. Therefore, the inventions of claims 1 and 10 cannot be regarded as being so linked as to form a single general inventive concept through a common special technical feature.

Consequently, the inventions of claims 1-10 cannot be regarded as being so linked as to form a single general inventive concept through a common special technical feature.

Then, the claims of the present international application are marshaled based on their technical features, and the claims include two groups of inventions classified as follows: (1) claims 1-9; and (2) claim 10.

Document 1: JP 2004-80 A (Asahi Breweries, Ltd.) 08 January, 2004 (08.01.04)

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006271273 A
- JP H08224075 A
- JP 2003289824 A
- JP 2003204779 A
- JP H10313849 A
- JP 2005192473 A
- JP 2003210154 A